**Europäisches Patentamt**

(19) **European Patent Office**

**Office européen des brevets**

(11) Numéro de publication: **0 245 682**
**A2**

(12) # DEMANDE DE BREVET EUROPEEN

(21) Numéro de dépôt: **87106078.6**

(22) Date de dépôt: **27.04.87**

(51) Int. Cl.³: **G 08 B 13/00**

(30) Priorité: **07.05.86 CH 1881/86**

(43) Date de publication de la demande:
**19.11.87 Bulletin 87/47**

(84) Etats contractants désignés:
**AT BE DE ES FR GB IT NL SE**

(71) Demandeur: **Alioth, Alexandra**
**Chemin des Trois-Rois, 4**
**CH-1005 Lausanne(CH)**

(72) Inventeur: **Alioth, Jean-Pierre**
**Caroline 8**
**CH-1003 Lausanne(CH)**

(74) Mandataire: **Misrachi, Alfred**
**15, Ch. de la Plantaz**
**CH-1024 Ecublens(CH)**

(54) **Dispositif de commande d'un appareil électrique d'alarme.**

(57) Le dispositif comprend un détecteur d'action d'efraction (20) comportant un transducteur piézo-électrique (2) enrobé dans un support diélectrique (21) présentant une paroi plane (22) disposée dans le plan d'une paroi (P) d'une structure de fermeture, en un endroit susceptible de subir le contrecoup d'une action d'effraction.

Un détecteur électronique (23) d'une valeur de seuil choisie ($U_R$) de l'intensité de l'action d'effraction traduite par le signal ($U_1$) due transducteur piézo-électrique (2) alimente un circuit de commande (9) du déclenchement de l'alarme d'un appareil électrique d'alarme (10) pour un signal ($U_1$) du transducteur précité plus grand ou égal au seuil choisi ($U_R$).

_FIG.-2_

EP 0 245 682 A2

Dispositif de commande d'un appareil électrique d'alarme

La présente invention a pour objet un dispositif de commande d'un appareil électrique d'alarme pour la protection contre l'ouverture forcée d'une structure de fermeture d'un espace clos comprenant un détecteur d'action d'effraction présentant une paroi plane destinée à être disposée dans le plan de l'une des parois de la structure de fermeture en un endroit susceptible de subir le contrecoup d'une action d'effraction et dans lequel le détecteur susdit comporte des éléments associés à la paroi plane pour produire un signal électrique de commande du déclenchement de l'alarme sous l'effet d'un dépassement d'un seuil prédéterminé de l'intensité de l'action d'effraction.

Ce dispositif est conçu pour parer à une technique d'effraction qui consiste à forcer un ouvrant dans le cadre d'une structure de fermeture.

Le cambrioleur appliquant cette technique, par exemple à l'aide d'un levier, introduit ce dernier entre la face extérieure de l'ouvrant et son cadre et, en se servant du cadre comme point d'appui, exerce une force de pression sur l'ouvrant pour arracher du cadre la gâche de la serrure ou pour arracher les gonds sur le côté articulé de l'ouvrant.

Un dispositif de ce genre, décrit dans le brevet suisse No 576 678 a déjà été conçu pour parer à cette technique d'effraction.

Dans ce dispositif, la paroi plane fait partie d'un détecteur électro-mécanique d'action d'effraction encastré dans un siège d'un montant du cadre d'une porte, en face d'un bord de celle-ci. Cette paroi plane ainsi disposée présente une face parallèle au bord précité qui est percée d'un trou d'entraînement et est montée mobile par déplacement dans le plan de cette face derrière une platine de fixation percée également d'un trou au travers duquel vient s'engager un doigt d'engagement solidaire de la porte et venant en prise dans le trou d'entraînement de la paroi plane lorsque la porte est fermée.

La paroi plane précitée est ici associée à des éléments électro-mécaniques de maintien et de contact électrique ayant pour fonction de la maintenir élastiquement dans une position d'ouverture d'un circuit d'alimentation de l'appareil électrique d'alarme à l'encontre de tout déplacement par ripage dans son plan, à la manière du déclencheur d'un interrupteur à deux positions d'ouverture et de fermeture de ce circuit.

La réponse de la retenue élastique de la paroi plane est déterminée de manière à interdire tout déplacement inopportun de celle-ci lors d'une utilisation normale de la porte par les ayants-droit, y compris lorsque cette dernière est claquée par accident.

Par contre tout forcement de la porte par ripage dans son cadre à l'aide d'un levier provoque par l'entremise du doigt d'entraînement qui lui est associé, le déplacement de la paroi plane dans le trou de laquelle ce doigt est engagé, à l'encontre de sa retenue élastique, ce qui a pour effet de fermer le circuit d'alimentation de l'appareil électrique d'alarme et de déclencher celle-ci.

Ce dispositif présente l'intérêt de surprendre le cambrioleur par le déclenchement inopiné de l'alarme pendant sa manoeuvre d'effraction et de l'inciter à fuir sans poursuivre sa tentative.

Les dégâts occasionnés par une telle tentative d'effraction sont en grande partie fonction de la sensibilité du détecteur d'action d'effraction, sauf évidemment dans le cas peu probable d'une poursuite de cette tentative par le cambrioleur, après le déclenchement du signal d'alarme.

La définition de la course utile des contacts électriques pour déclencher l'alarme, l'amplitude du déplacement de la paroi plane nécessaire au parcours de cette course et le degré d'élasticité de la retenue de la paroi plane entrent en compte dans cette sensibilité. Il est donc aisé de moduler cette sensibilité à volonté en agissant sur ces paramètres.

Il faut cependant noter que le déclenchement de l'alarme ne peut être provoqué que par déplacement, aussi faible soit-il, de la paroi plane du détecteur d'effraction par rapport à la porte, c'est-à-dire en fait par forçage du pène dans la gâche de la serrure ou par déplacement des gonds, selon le côté attaqué.

En outre, le détecteur d'action d'effraction conçu sous la forme d'un arrangement électro-mécanique met en action des organes mobiles et des contacts électriques sujets à usure et à corrosion, de fabrication mécanique relativement précise par les ajustages qu'ils exigent.

L'invention a pour but, dans le cadre de la recherche d'un déclenchement d'alarme avant tout dégât matériel consécutif à une tentative d'action d'effraction, d'obtenir ce déclenchement de manière simple et fiable, dépourvue des inconvénients précités.

A cet effet, le dispositif selon l'invention est caractérisé en ce que le détecteur d'action d'effraction comporte un transducteur piézo-électrique dont une face sensible est située et maintenue sous la paroi plane à une distance prédéterminée de celle-ci et en ce que ladite paroi plane est prévue déformable par élasticité propre, le transducteur piézo-électrique étant relié électriquement à un circuit électrique de commande du déclenchement de l'alarme de l'appareil électrique d'alarme sensible à son signal.

De la sorte, sous l'effet d'un contrecoup consécutif à une action d'effraction, tel que par exemple sous la pression directe ou indirecte d'un outil d'effraction, la combinaison du degré d'élasticité de la paroi plane et de la grandeur de l'écart entre celle-ci et la face sensible du transducteur piézo-électrique constituent une valeur de seuil de l'intensité de l'action d'effraction choisie à partir de laquelle l'alarme est déclenchée, c'est-à-dire notamment à partir de l'instant de la prise de contact de la paroi plane avec cette face sensible, sous une pression pour laquelle cet élément fournit une réponse sous forme d'un potentiel électrique.

Ainsi réalisé, ce dispositif est d'une grande simplicité excluant l'ajustage d'organes mécaniques mobiles sujets à usure et à corrosion, ainsi que d'une grande fiabilité par la stabilité de sa sensibilité qui est définie par la combinaison de paramètres stables chacun en soi.

Dans le but de rendre encore plus aisé le réglage de la sensibilité du dispositif à une action d'effraction, notamment dans la recherche d'un subtil équilibre entre un déclenchement prématuré consécutif à un ébranlement accidentel tel qu'un claquage de porte et un déclenchement tardif après endommagement plus ou moins grave de la structure de fermeture subissant l'action d'effraction, et selon le même concept basé sur la combinaison des effets de l'élément piézo-électrique et d'un système de détection de seuil de l'intensité de l'action d'effraction, le dispositif selon l'invention est également caractérisé en ce que le détecteur d'action d'effraction comporte un transducteur piézo-électrique enrobé dans un support dont une face constitue la paroi plane, et un détecteur électronique d'un seuil de valeur choisie de la grandeur du signal du transducteur piézo-électrique relié électriquement à ce dernier, ce détecteur électronique de seuil étant relié à un circuit de commande du déclenchement de l'alarme sensible à un signal de valeur plus grande ou égale à celle du seuil choisi précité.

De la sorte, la sensibilité du dispositif peut être réglée indépendamment de l'élasticité de la paroi plane du support du transducteur piézo-électrique par réglage de la valeur de seuil du détecteur électronique de seuil à partir et dès le premier signal capable du transducteur piézo-électrique, c'est-à-dire par exemple dès la mise en contact d'un outil d'effraction avec la paroi plane de ce support, puisque celle-ci est en contact direct avec le transducteur piézo-électrique.

Cette possibilité de réglage présente en outre l'avantage supplémentaire de pouvoir changer si besoin est la sensibilité du dispositif, une fois celui-ci déjà installé dans la structure de fermeture, sans devoir intervenir sur le support et son transducteur piézo-électrique.

Le dessin annexé représente, à titre d'exemples, deux formes d'exécution de l'objet de l'invention ainsi que trois exemples d'installation de la première forme d'exécution et un exemple d'installation de la seconde forme d'exécution sur des structures de fermeture.

La figure 1 représente en coupe transversale la première forme d'exécution associée à un schéma fonctionnel de son circuit électrique de commande.

La figure 2 représente en coupe transversale la seconde forme d'exécution associée à un schéma fonctionnel de son circuit électrique de commande.

Les figures 3, 4 et 5 sont trois coupes transversales des trois exemples d'installation de la première forme d'exécution.

La figure 6 est une coupe transversale de l'exemple d'installation de la seconde forme d'exécution.

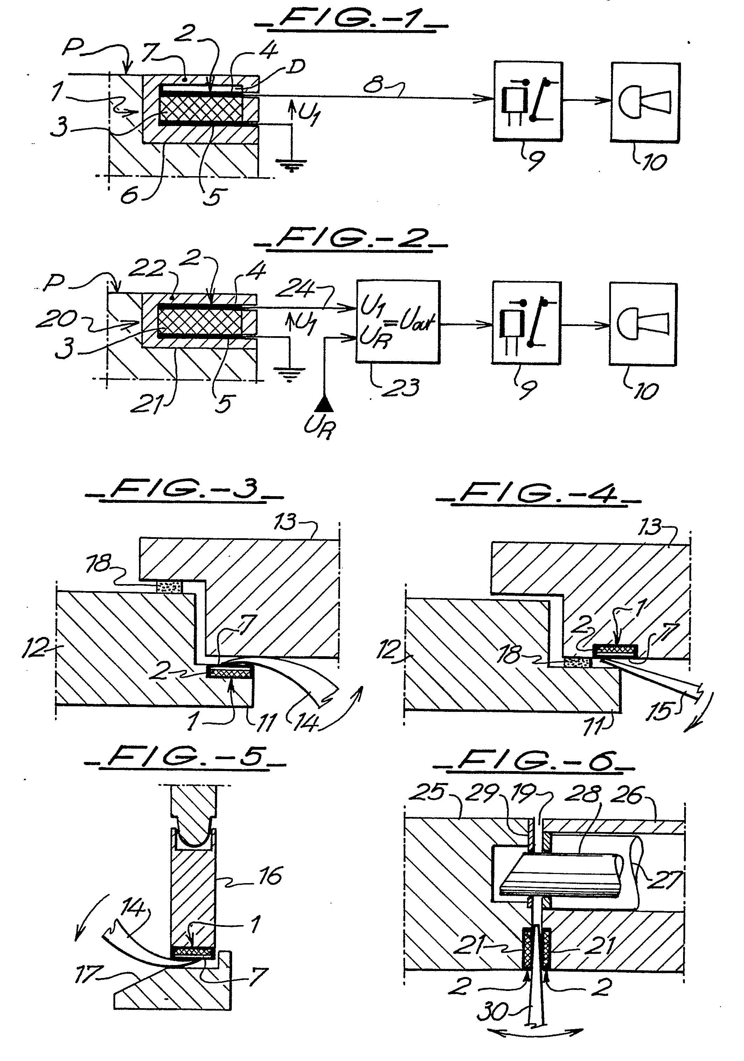

Dans sa première forme d'exécution représentée figure 1 le dispositif de commande d'un appareil électrique d'alarme comprend un détecteur d'action d'effraction 1 comportant :

- un transducteur piézo-électrique 2 composé de manière habituelle d'une matière piézo-électrique 3 ici sous la forme d'une bande de section rectangulaire, insérée entre deux bandes conductrices ou électrodes 4 et 5;

- un profilé rectangulaire 6 en matériau diélectrique, par exemple une matière plastique extrudée, dans lequel est collé par l'une de ses deux faces 5 le transducteur piézo-électrique 2.

Le dimensionnement du profilé 6 est prévu de telle sorte qu'une face sensible du transducteur 2, ici la bande-électrode 4, soit située à une distance prédéterminée D de la paroi plane 7 du profilé opposée à celle sur laquelle ce transducteur est collé. Cette paroi plane 7 est destinée à être disposée dans le plan de l'une des parois d'une structure de fermeture en un endroit susceptible de subir le contrecoup d'une action d'effraction, comme il est montré par les figures 3, 4 et 5 et expliqué plus loin.

Le transducteur piézo-électrique 2 du détecteur d'action d'effraction ainsi constitué est relié par une liaison électrique 8, à un circuit de commande du déclenchement de l'alarme d'un appareil électrique d'alarme 10, qui est ici simplement constitué par un relais 9 sensible à tout signal potentiel $U_1$ provenant dudit transducteur 2.

L'épaisseur de la paroi plane 7 du profilé 6 et la distance $D$ qui la sépare de la face sensible 4 du transducteur 2 sont prévues, compte tenu de l'élasticité du matériau utilisé, de manière que cette paroi plane puisse être déformée par élasticité propre jusqu'à venir en contact avec cette face sensible 4, et ceci sous une pression suffisante significative d'une tentative de forcement.

De préférence, la sensibilité du relais 9 est accordée au signal capable $U_1$ du transducteur 2 avant déformation non élastique de ce dernier. Dans le cas contraire, un amplificateur opérationnel, non représenté, peut être intercallé dans le circuit entre le transducteur 2 et le relais 9, de manière à ce que l'alarme soit déclenchée avant cette déformation.

Sur la figure 3, le détecteur d'action d'effraction 1 de cette première forme d'exécution est montré installé et fixé, par exemple par collage, dans une rainure de la battue 11 d'une porte 12 faisant face à un montant 13 du cadre de cette porte. La paroi plane 7 du profilé contenant le transducteur piézo-électrique 2 est orientée vers le montant 13 de telle sorte qu'elle puisse être exposée au contrecoup d'un outil d'effraction 14 en forme de levier du genre pied-de-biche, introduit dans la fente existant entre la battue 11 et le montant 13 et mis en appui par son coude sur ce montant.

Sur la figure 4, le détecteur d'action d'effraction 1 est montré installé non plus sur la porte 12 mais sur le montant 13 de son cadre, en face de la battue 11 de la porte et également fixé et collé dans une rainure, mais avec cette différence qu'ici la paroi plane 7 du profilé contenant le transducteur piézo-électrique 2 est partiellement visible depuis l'extérieur. Cette visibilité peut être recherchée pour son effet dissuasif. En outre, ainsi disposée, la paroi plane 7 du détecteur d'action d'effraction permet de parer aussi bien à un forcement tenté par un levier 15 du genre tournevis mis en appui sur la battue 11 de la porte, comme cela est représenté sur cette figure 4, qu'à un forcement par un pied-de-biche qui est alors nécessairement mis en appui par son coude sur cette paroi plane 7.

Dans ces deux premiers exemples d'installation, le détecteur d'action d'effraction 1 peut être étendu de préférence sur toute la hauteur de la porte, aussi bien du côté de la serrure que du côté des gonds, ou bien seulement limité aux zones occupées par l'un ou par l'autre de ces éléments qui sont plus volontiers choisis pour forcement.

Bien entendu le dispositif peut être installé sur toute structure de fermeture susceptible de subir une action d'effraction telle qu'une fenêtre, un vasistas, une porte de coffre-fort ou bien encore sur un volet roulant à lames, comme dans le troisième exemple d'installation représenté figure 5.

Dans cette installation le détecteur d'action d'effraction 1 est collé en bout de la première lame 16 d'un volet roulant, de manière à présenter sa paroi plane 7 en face de la traverse basse 17 du cadre de ce volet, dans une position ainsi exposée à la pression d'un levier, tel que par exemple le pied-de-biche 14 représenté mis en appui par son coude sur ladite traverse basse.

Dans ce troisième exemple d'installation, la raideur du profilé contenant le transducteur piézo-électrique doit être suffisante pour résister à une retombée brutale accidentelle du volet roulant contre la traverse basse 17 du cadre.

De même dans les deux exemples d'installation montrés précédemment figure 3 et 4, la raideur de ce profilé doit être suffisante pour résister à un claquage de porte accidentel, provoqué par exemple par un courant d'air, qui aurait pour effet, d'écraser la bande de protection 18 généralement entreposée entre battants et dormants des structures de fermeture, et de faire taper la paroi plane 7 du détecteur 1 contre l'élément lui faisant face.

Quant à l'action d'effraction proprement dite, la valeur du seuil de son intensité choisi pour provoquer le déclenchement de l'alarme est définie par la combinaison du degré d'élasticité de la paroi plane 7 du détecteur 1 et de la grandeur de l'écart D entre celle-ci et la face sensible 4 du transducteur piézo-électrique 2. En jouant sur ces paramètres ainsi que sur la capacité du transducteur piézo-électrique 2 à actionner le relais 9, tous les choix sont possibles, en particulier celui de déclencher l'alarme avant tout début de détérioration d'un élément quelconque de la structure de fermeture, et cela de manière fiable par la stabilité intrinsèque de ces paramètres.

Dans sa seconde forme d'exécution représentée figure 2, le dispositif de commande d'un appareil électrique d'alarme comprend un détecteur d'action d'effraction 20 comportant :

- un transducteur piézo-électrique 2 composé de manière identique à celui de la première forme d'exécution mais qui est ici enrobé dans un support 21 en matériau diélectrique, par exemple en matière plastique moulée autour de lui et dont une paroi 22 constitue ici la paroi plane du détecteur destinée à être disposée dans le plan de l'une des parois P d'une structure de fermeture susceptible de subir le contrecoup d'une action d'effraction;

- un détecteur électronique 23 d'un seuil de valeur choisie de la grandeur du signal du transducteur piézo-électrique 2 relié à ce dernier par une liaison électrique 24 et qui est ici constitué par un comparateur à sortie binaire. Ce comparateur 23 reçoit par la liaison 24 et par une première entrée le signal $U_1$ du transducteur piézo-électrique 2 et par une seconde entrée un signal de référence $U_R$ significatif de la valeur du seuil choisi; il délivre un signal de sortie $U_{out}$ sous forme d'impulsion de commande, significatif d'une équivalence ou d'un dépassement du signal de référence $U_R$ par le signal $U_1$ du transducteur piézo-électrique 2, selon la loi :

$$U_{out} = 1 \text{ si } U_1 \geqslant U_R$$

Le détecteur d'action d'effraction ainsi constitué dans sa seconde forme d'exécution est relié par son détecteur électronique de seuil 23 à un circuit de commande du déclenchement de l'alarme de l'appareil électrique d'alarme 10 qui est ici également constitué par un relais 9 actionné par le signal de sortie $U_{out}$ délivré par ledit détecteur électronique de seuil 23.

Sur la figure 6, le transducteur piézo-électrique 2, enrobé dans son support 21, selon la deuxième forme d'exécution qui vient d'être décrite, est installé en double de part et d'autre de la fente 19 existant entre le cadre 25 et la porte 26 d'une structure de fermeture sans battues, chacun d'eux engagé et collé dans une rainure du cadre d'un côté et de la porte de l'autre, à proximité de la serrure 27 de cet ouvrant dont le pène 28 est montré engagé dans la gâche 29 du cadre 25.

Ce double arrangement ainsi disposé permet de répondre à la fois à une tentative de dégagement du pène 28 de la gâche 29 à l'aide d'un levier 30 engagé dans la fente 19 et à une tentative de sciage de ce pène à l'aide d'une lame de scie, non représentée. En effet, lors de l'une ou de l'autre de ces deux tentatives, le levier 30 ou la lame de scie finit par entrer inévitablement en contact avec les parois exposées des supports 21 des deux transducteurs piézo-électrique 2 enrobés dans ces supports, sous une pression plus ou moins grande qui, de toute façon, provoque l'émission d'un signal $U_1$ fonction de cette pression.

Le choix de l'intensité de l'action d'effraction devant déclencher l'alarme est ici directement défini par la valeur du signal de référence $U_R$ du détecteur électronique de seuil 23 (figure 2), indépendamment de l'élasticité de la paroi du support 21 enrobant le transducteur piézo-électrique 2, puisque la face sensible de ce dernier est en contact intime avec ladite paroi, sans vide intermédiaire. Il est ainsi très aisé de régler la sensibilité du dispositif en jouant sur la valeur de ce signal de référence $U_R$, autant avant sa pose sur une structure de fermeture qu'après celle-ci, et ceci de manière très fine.

Des variantes, non représentées, peuvent être apportées sans sortir du cadre de l'invention.

Ainsi, dans sa première forme d'exécution représentée figure 1, la paroi plane 7 du détecteur d'action d'effraction 1 peut être constituée non pas par une paroi d'un profilé rapporté dans un rainure tel que le profilé 6, mais tout simplement par une lame d'une paroi elle-même de la structure de fermeture dégagée par une fente parallèle pratiquée sous celle-ci et dans laquelle est engagé et fixé le transducteur piézo-électrique 2.

Le profilé 6 de la première forme d'exécution peut être ouvert d'un côté, en forme de U.

Dans la seconde forme d'exécution selon figure 2, le détecteur d'action d'effraction 20 peut également être inséré dans une rainure parallèle à une paroi de la structure portante, notamment pour le cas d'une réalisation dans laquelle le support 21 enrobant le transducteur piézo-électrique 2 est très mince, avec cependant la condition impérative d'un contact intime qui peut être assuré par un ajustage légèrement serré de la rainure autour du transducteur.

Toujours dans sa deuxième forme d'exécution représentée figure 2, le détecteur électronique de seuil 23, qui est ici un comparateur à sortie binaire, peut être remplacé par un circuit équivalent ou bien par un équivalent tel que par exemple un voltmètre à seuil de genre apte à délivrer une impulsion de commande dès le dépassement d'un potentiel maximal prédéterminé.

Lorsque le transducteur piézo-électrique 2 des deux formes d'exécution est étendu sur une grande distance, comme par exemple sur toute la hauteur d'un ouvrant, il peut être constitué par une pluralité d'éléments séparés reliés chacun au circuit de commande du déclenchement de l'alarme ou bien par des pastilles séparées de matière piézo-électrique 3 enserrées entre deux bandes-électrodes continues 4 et 5.

Revendications

1. Dispositif de commande d'un appareil électrique d'alarme pour la protection contre l'ouverture forcée d'une structure de fermeture d'un espace clos comprenant un détecteur d'action d'effraction présentant une paroi plane destinée à être disposée dans le plan de l'une des parois de la structure de fermeture en un endroit susceptible de subir le contrecoup d'une action d'effraction et dans lequel le détecteur susdit comporte des éléments associés à la paroi plane pour produire un signal électrique de commande du déclenchement de l'alarme sous l'effet d'un dépassement d'un seuil prédéterminé de l'intensité de l'action d'effraction, caractérisé en ce que le détecteur d'action d'effraction (1) comporte un transducteur piézo-électrique (2) dont une face sensible est située et maintenue sous la paroi plane (7) à une distance prédéterminée de celle-ci et en ce que ladite paroi plane est prévue déformable par élasticité propre, le transducteur piézo-électrique étant relié électriquement à un circuit électrique de commande du déclenchement de l'alarme de l'appareil électrique d'alarme (10) sensible à son signal.

2. Dispositif de commande d'un appareil électrique d'alarme pour la protection contre l'ouverture forcée d'une structure de fermeture d'un espace clos comprenant un détecteur d'action d'effraction présentant une paroi plane destinée à être disposée dans le plan de l'une des parois de la structure de fermeture en un endroit susceptible de subir le contrecoup d'une action d'effraction et dans lequel le détecteur susdit comporte des éléments associés à la paroi plane pour produire un signal électrique de commande du déclenchement de l'alarme sous l'effet d'un dépassement d'un seuil prédéterminé de l'intensité de l'action d'effraction, caractérisé en ce que le détecteur d'action d'effraction comporte un transducteur piézo-électrique (2) enrobé dans un support (21) dont une paroi (22) constitue la paroi plane, et un détecteur électronique (23) d'un seuil de valeur choisie de la grandeur du signal du transducteur piézo-électrique relié électriquement à ce dernier, ce détecteur électronique de seuil étant relié à un circuit de commande du déclenchement de l'alarme sensible à un signal de valeur plus grande ou égale à celle du seuil choisi précité.

3. Dispositif selon la revendication 1, caractérisé en ce que la paroi plane (7) du détecteur d'action d'effraction (1) est constituée par une paroi d'un profilé (6) rapporté et fixé dans une rainure d'une paroi de la structure de fermeture et dans laquelle rainure est engagé et fixé le transducteur piézo-électrique 2.

4. Dispositif selon la revendication 1, caractérisé en ce que la paroi plane du détecteur d'action d'effraction est consituée par une lame d'une paroi de la structure de fermeture dégagée par une fente parallèle pratiquée sous celle-ci et dans laquelle fente est engagé et fixé le transducteur piézo-électrique.

5. Dispositif selon la revendication 2, caractérisé en ce que le détecteur électronique de seuil (23) est un comparateur à sortie binaire dont une entrée est reliée au transducteur piézo-électrique (2) pour en recevoir un signal ($U_1$) significatif d'une sollicitation physique, dont une seconde entrée est reliée à un générateur de signal de référence ($U_R$) représentatif de la valeur de seuil choisie, et dont le signal de sortie ($U_{out}$) apte à actionner un relais (9) de commande du déclenchement de l'alarme d'un appareil électrique d'alarme (10) est significatif d'une équivalence ou d'un dépassement du signal de référence ($U_R$) par le signal ($U_1$) du transducteur piézo-électrique (2).

0245682

_FIG.-1_

_FIG.-2_

_FIG.-3_

_FIG.-4_

_FIG.-5_

_FIG.-6_